# EUROPEAN PATENT SPECIFICATION

(11) **EP 4 292 965 B1**
(45) Date of publication and mention of the grant of the patent: **27.08.2025**
(21) Application number: 23177569.3
(22) Date of filing: 06.06.2023
(51) Int. Cl.: B65G 69/28

(54) **LOADING PLATFORM WITH INTERLOCK**
LADEPLATTFORM MIT SPERRUNG
PLATE-FORME DE CHARGEMENT AVEC VERROUILLAGE

(30) Priority: 13.06.2022 NL 2032140
(43) Date of publication of application: 20.12.2023
(73) Proprietor: Hörmann Alkmaar BV, 1822 BB Alkmaar (NL)
(72) Inventor: Tan, Kenneth Han Liong, 1824 KE Alkmaar (NL)
(74) Representative: Koomen, M.J.I.

(56) References cited:
- US-A- 3 460 175
- US-A- 4 279 050
- US-A- 4 865 507
- US-A- 5 117 526
- US-B2- 7 043 790

## Description

The present invention relates to a loading platform with a supporting plate which at its loading platform side rotatably is connected to the loading platform and which from there along can be turned downwards from out of a rest position or upright position, in which the supporting plate stands substantially upright, into a lying position, in which the supporting plate lies substantially horizontal or flat and can form a bridging between the loading platform and the loading floor of a vehicle that is to be loaded and unloaded, with locking means for the locking of the supporting plate in the upright position.

Such a loading platform is known and described for example in US 5117526 A, US 3460174 A and US 7043790 B2. In particular US 5117526 discloses a loading platform according to the preamble of claim 1.

With loading platforms there is the standard that a supporting plate, also referred to as loading flap or lip, must be locked when this stands upright, that is to say, is in the rest position. This so as to prevent that the loading flap unintentionally falls down, for instance when this is being leaned against.

The known loading platforms therefore comprise a locking means for locking the supporting plate in the upright position.

There is known a loading platform with an interlocking that works by way of a foot pedal that the co-worker continuously has to keep pushed in during the lowering of the plate.

This interlocking has the drawback, that the co-worker cannot keep his attention fully at the lowering of the plate, because he also has to concentrate on keeping the foot pedal pushed in.

The invention aims to obviate this drawback of the known loading platform.

The loading platform according to the invention to that end is characterized, in that the locking means are formed in that the loading platform is provided with a body with a seat, while the supporting plate is provided with a locking part that, as seen in the upright position of the supporting plate, at a portion above, via a first hinge point is suspended on the supporting plate and from out there can make a turning movement running perpendicular to the plane of the supporting plate, while a portion below comprises a foot by means of which the locking part can rest on the seat, and by means of which a turning downwards of the supporting plate is held up, whereby an operating means is provided by which the foot can be turned off the seat, whereby further means are provided by which, after the foot has been turned off the seat, it can be prevented that the foot turns back again onto the seat.

According to a characteristic of the loading platform according to the invention, the means are formed in that the supporting plate is provided with a holding part that, as seen in the upright position of the supporting plate, at an upper end via a second hinge point, located above the first hinge point, is suspended on the supporting plate and from out there can make a turning movement running perpendicular to the plane of the supporting plate, and whereby the holding means at a portion below comprises a first gripping part by means of which, as seen in the upright position of the supporting plate, it lies on or hangs against a resting point that is provided onto a middle portion of the locking part, and whereby the middle part, at a portion located below the resting point, is provided with a second gripping part, co-operating with the first gripping part, in such a way, that when the foot is turned from off the seat, the second gripping means ends up in a grip with the first gripping means.

According to a further characteristic of the loading platform according to the invention the second gripping means is formed by, as seen in the upright position of the supporting plate, a downwards running protruding part, and the first gripping means is formed by a hook.

Further characteristics and particulars of the loading platform according to the invention will be described with reference to the drawings of an example of an embodiment.
Figure 1 shows a perspective view of the back side of a supporting plate such as is part of the loading platform according to the invention, whereby this is turned upright relative to the bridge plate, in the rest position.
Figure 2 shows a perspective view of the front side of the supporting plate shown in figure 1, also in the position wherein this stands upright.
Figure 3 shows a perspective view of a detail of the back side of the supporting plate shown in figure 1.
Figure 4 shows a perspective view of a detail of the front side of the supporting plate as shown in figure 2.
Figure 5a shows a side view in section of the supporting plate, in the position in which this stands upright.
Figure 5b shows a side view in section of the supporting plate, in the position in which this stands upright, but wherein the foot has been pushed of the seat.
Figure 5c shows a side view in section of the supporting plate, in a position in which this has been turned a length downwards.
Figure 5d shows a side view in section of the supporting plate, in the position in which this lies horizontal or flat, and in which position the supporting plate can form a bridging between the loading platform and the loading floor of a vehicle that is to be loaded and unloaded.
Figure 5e shows a side view in section of the supporting plate, in the position in which this has been turned a length upwards again.

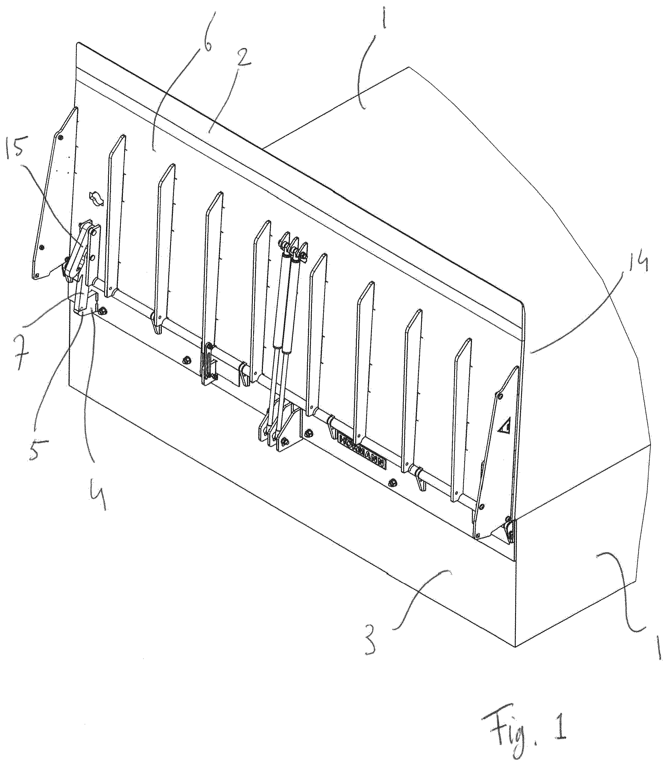

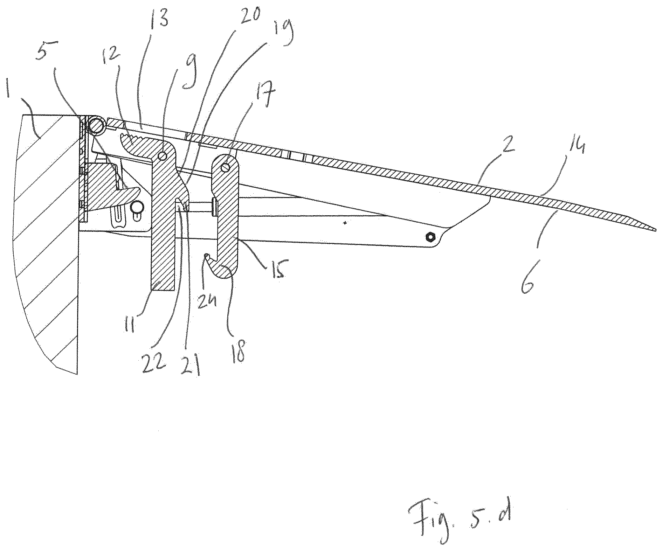

In the figures 1. 2 and 4 is shown a part of a loading platform 1. The loading platform 1 comprises at the front side a supporting plate 2 provided rotatably. The supporting plate 2 can be turned from out of a rest position or upright position, in which the supporting plate 2 stands substantially upright (figures 1, 2,3 4, 5a and 5b) downwards into a lying position, in which the supporting plate 2 lies substantially horizontal or flat (figure 5d) and in this way can form a bridging between the loading platform 1 and the loading floor of a vehicle that is to be loaded and unloaded (not shown in the figures).

There are provided interlocking means so that the supporting plate 2. when this stands in the upright position, can be locked in that position, so that this does not unintentionally smack down and cause damage to persons.

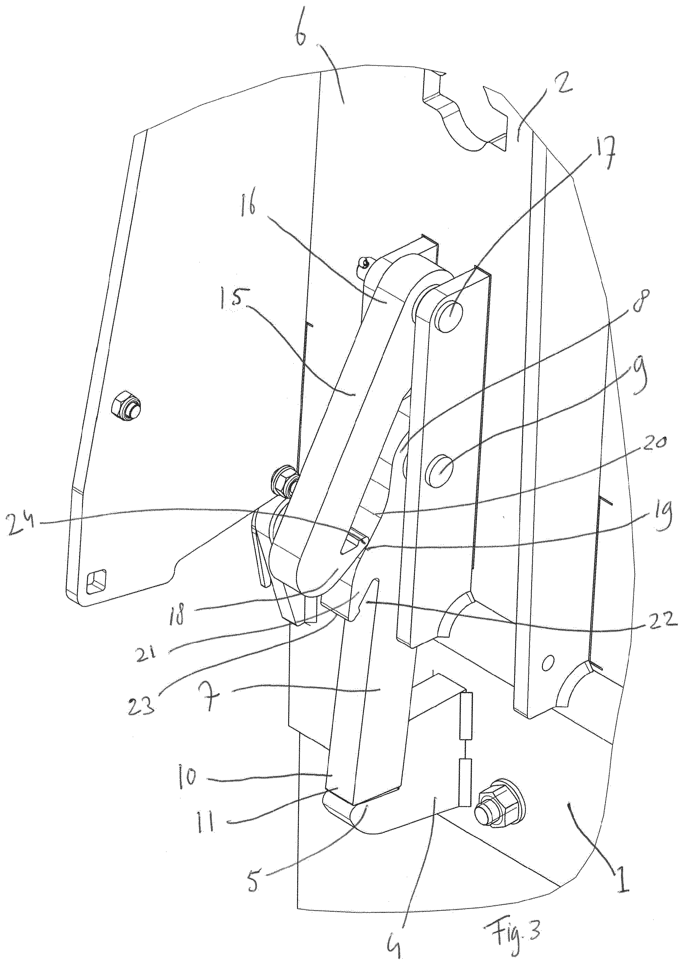

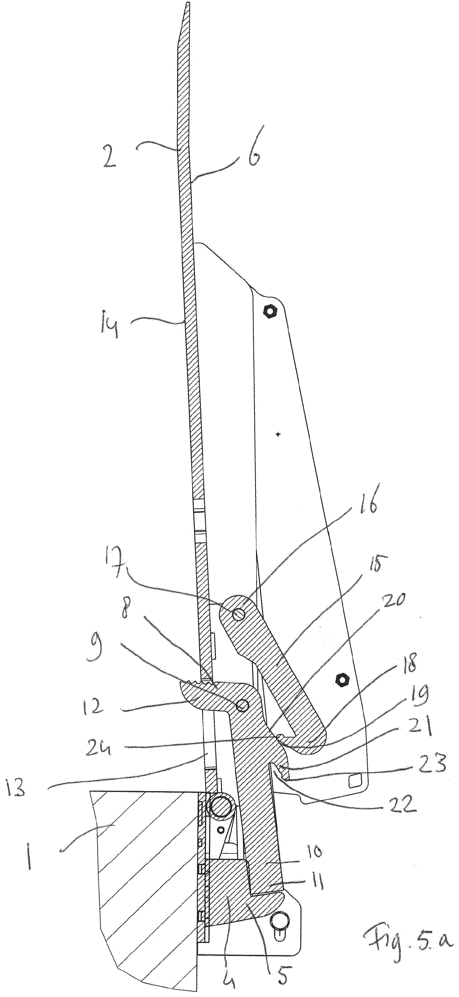

As can be seen in the figures 3 and 5a. in this example of an embodiment, at the front side 3 of the loading platform 1 a body 4 is provided with a seat 5. As can be seen in the figures 1. 3 and 5a the supporting plate 2. as seen in the upright position of the supporting plate 2. is provided at the back side 6 with, in this example of an embodiment, a substantially rod shaped locking part 7. As seen in the upright position of the supporting plate 1 (2), shown in figures 1. 2, 3, 4, 5a and 5b, the locking part 7 at its portion 8 above is suspended via a first hinge point 9 on the supporting plate 2. From this first hinge point 9 the locking part 7 can make turning movement, running perpendicular to the plane of the back side 6 of the supporting plate 2. At its portion 10 below the locking part 7 is provided with a foot 11, by way of which the locking part 7 can rest on the seat 5. In the drawings it can be seen that, when the locking part 7 stands by its foot 11 on the seat 5. the locking element 7, due to the attachment to the supporting plate 2 by way of the hinge point 9, prevents a turning downwards of the supporting plate.

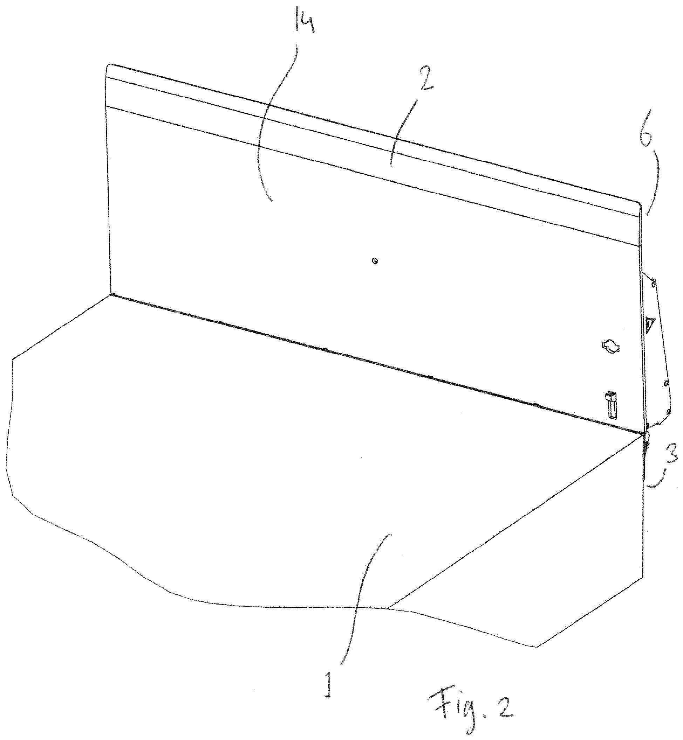

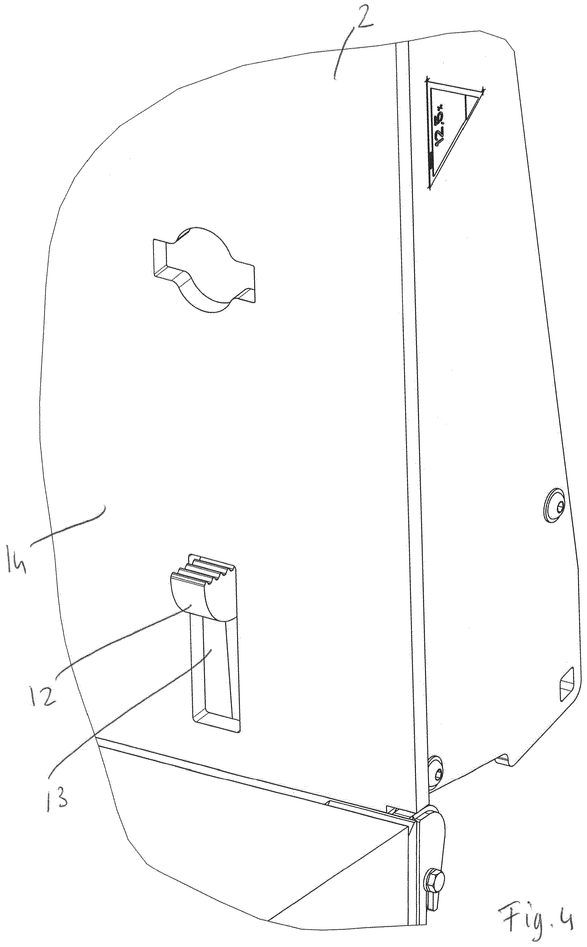

In order to be able to turn the supporting plate 1(2) downwards it is necessary for the foot to go away from the seat 5. To that end a pedal 12 is formed on to the locking part 7 at the portion 8 above. The pedal 12 can be reached via the front side 14 of the supporting plate 2 through an opening 13 provided in the supporting plate 2 (figures 2, 4, 5a, 5b, 5c, 5d). When an operator pushes the pedal 12 downwards the locking part 7 pivots around the first hinge point 9. With that the foot 11 turns sideways and upwards away from the plane of the back side 6 of the supporting plate 2, and away from the seat 5.

If the pedal 4(12) were to be released again the locking element 7 would, due to its weight, turn back again to its starting position along the hinge point 9.

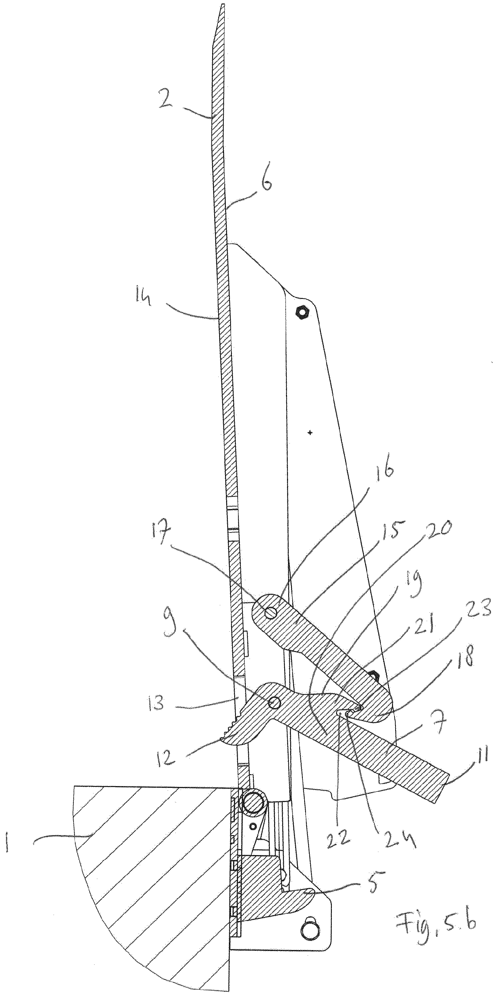

In order to attain that the locking part 7. as soon as the pedal 12 is released, will not immediately turn back again along the hinge point 9 and end up again with the foot 11 on the seat 5, the supporting plate 2 is provided on the back side 6 with, in this example of an embodiment, a. substantially rod-shaped, holding part 15. As seen in the upright position of the supporting plate 2. the holding part, at an upper end 16, is suspended on the supporting plate 2 via a second hinge point 17, located above the first hinge point 19. From out there the holding part 15 can make a turning movement running perpendicular to the plane of the back side 6 of the supporting plate 2, as can be seen in figure 5b. The holding part 15 below has a first gripping part 18, in this example of an embodiment a hook 18. As can be seen in the figures 1, 3, 5a and 5b, the holding part 15 hangs, in the upright position of the supporting plate 2, shown in the figures 1, 3 and 5a, partly against the locking part 7, whereby the hook 18 lies on or hangs against a resting point 19 that is situated on a middle part 20 of the locking part 7. A length underneath this resting point 19 the locking part 7 is provided with a second gripping part 21, in this example of an embodiment in the form of a protruding part 21, that, in this example of an embodiment, as seen in de upright position of the supporting plate 2, runs downwards.

The first gripping part 18 and the second gripping part 21 work together as follows.

In figure 5a is shown a side view in section of the supporting plate 2. in the position in which this stands upright. The foot 11 rests on the seat 5. The hook 18 lies or hangs against the resting point 19 on the middle part 20 of the locking part 7. Figure 5b shows a same side view in section of the supporting plate, in the position in which this stands upright, but wherein the foot pedal 12 has been pushed in and the locking part 7 along the first hinge point 9 has been turned a length upwards, and whereby the foot 11 has been turned away from the seat 5. With this turning upwards of the locking part 7 the protruding part 21 slides along the hook 18 on the holding part 15, whereby the bottom edge 23 of the protruding part 21 at some moment passes the point 24 of the hook. Thereby the hook 18 eventually ends up in the space 22 between the protruding part 21 and the middle part 20. and hooks fixedly therein. By means of this the holding part 15 holds the locking part 7 in a position wherein this is partly turned upwards, and the locking part 7 cannot turn back, and the foot cannot 11 end up on the seat 5.

An operator can now turn the supporting plate 2 downwards in the lying position.

He thereby does not have to hold the pedal pushed in, because, as can be seen in figure 5b, the locking part 7 at the location of the space 22 between the protruding part 21 and the middle part 20 is held by the hook 18. and therewith the locking part 7 is held in a partly upwards turned position. The locking arm 7 cannot turn back, and the foot cannot end up back on the seat 5.

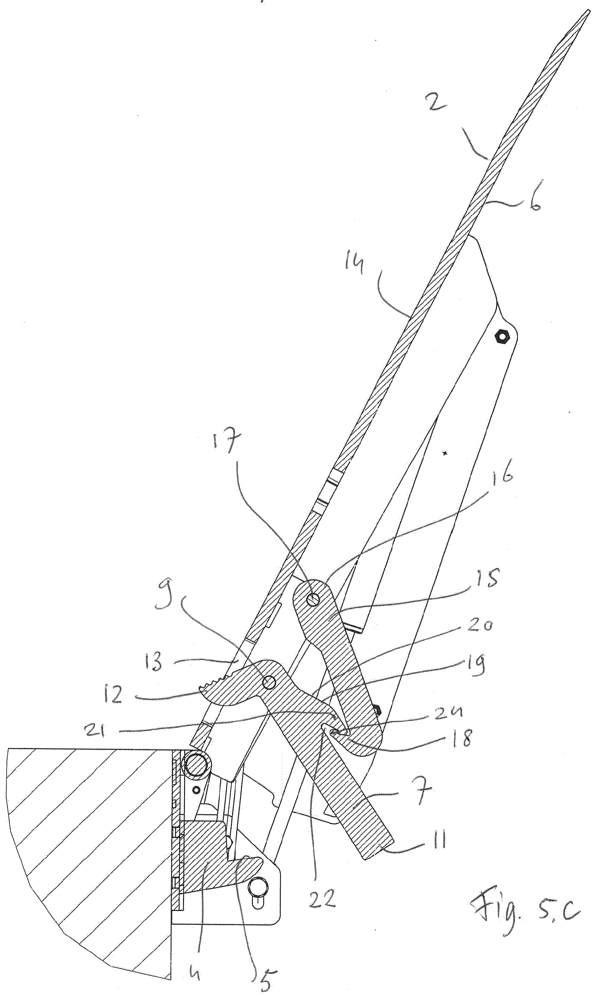

The supporting plate 2 can now be turned downwards further by the operator, and, as can be seen in figure 5c, the holding part 15 thereby keeps on holding the locking part 7. so that the foot 11 remains being turned away from the seat 5. In figure 5d, that shows the supporting plate 2 in the position wherein this lies completely horizontal or flat, it can be seen that during the further turning downwards of the supporting plate 2 the locking part 7 along the first hinge point 9 and the holding part 15 along the second hinge point 17 turn further away from the plane of the back side 6 of the supporting plate 2. whereby these in the lying position of the supporting plate 2, underneath the supporting plate 2. because of their weight, hang straight downwards.

During the turning movement of the supporting plate 2 downwards and during the turning of the locking part 7 and the holding part 15 along the hinge points 9 and 17. the locking part and the holding part because of their weight move away from each other. The distance between the first hinge point 9 and the second hinge point 17, the position of the hook 18 on the holding part 15 and the position of the protruding part 21 on the locking part 7. as well as the shape of the hook 18 and the protruding part 21, are adapted to each other, such that it is attained that during the turning movement downwards of the supporting plate 2 toward the lying position the hook 18 at some moment again falls out of the space 22 between the protruding part 21 and the middle part 20.

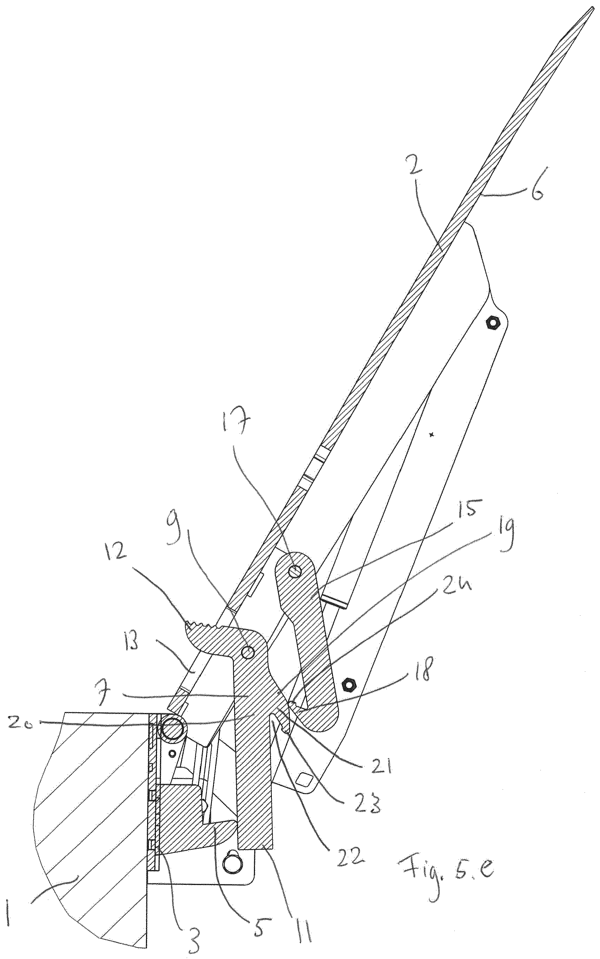

Now when the supporting plate 2 out of the lying position is turned upwards again to the position upright, the locking part 7 and the holding part 15 again turn towards the plane of the back side 6 of the supporting plate 2. As can be seen in figure 5e with the movement upwards the hook 18 again comes to lie on or hang against the resting point 19 on the middle portion 20 of the locking part 7 and so end up in the starting position shown in figures 1, 3 and 5a. Because the food pedal 12 is not pushed in, and also because there is no question of the holding part keeping the locking part turned upwards, the foot 11 can automatically end up on the seat 5. and the supporting plate 2 is locked again in the resting position.
1. Loading platform
2. Supporting plate
3. Front side bridge plate
4. Body
5. Seat
6. Back side supporting plate
7. Locking part
8. Portion above of locking part
9. First hinge point
10. Portion underneath locking part
11. Foot
12. Pedal
13. Opening supporting plate
14. Front side supporting plate
15. Holding part
16. Upper end holding part
17. Second hinge point
18. First gripping part / hook
19. Resting point
20. Middle portion locking part
21. Second holding part / protruding part
22. Space
23. Bottom edge protruding part
24. Point of the hook

## Claims

1. Loading platform (1) with a supporting plate (2) which at its loading platform side rotatably is connected to the loading platform and which from there along can be turned downwards from out of a rest position or upright position, in which the supporting plate (2) stands substantially upright, into a lying position, in which the supporting plate (2) lies substantially horizontal or flat and can form a bridging between the loading platform and the loading floor of a vehicle that is to be loaded and unloaded, with locking means (7) for the locking of the supporting plate (2) in the upright position, **characterized in that** the locking means are formed **in that** the loading platform (1) is provided with a body (4) with a seat (5), while the supporting plate (2) is provided with a locking part (7) that, as seen in the upright position of the supporting plate (2), at a portion (8) above, through a first hinge point (9), is suspended on the supporting plate (2) and from out there can make a turning movement running perpendicular to the plane of the supporting plate (2), while a portion below (10) comprises a foot (11) by means of which the locking part (7) can rest on the seat (5), and by means of which a turning downwards of the supporting plate (2) is held up, whereby an operating means is provided by which the foot (11) can be turned off the seat (5) and a turning downwards of the supporting plate (2) no longer is prevented, whereby further means are provided by which, after the foot (11) has been turned of the seat (5), it can be prevented that the foot (11) turns back again on to the seat (5).

2. Loading platform according to claim 1, **characterized in that** the means are formed in that the supporting plate (2) is provided with a holding part (15) that, as seen in the upright position of the supporting plate (2) at an upper end (16) via a second hinge point (17), located above the first hinge point (9), is suspended on the supporting plate (2) and from out there can make a turning movement running perpendicular to the plane of the supporting plate (2), and whereby the holding part (15) at a portion below comprises a first gripping part (18) by means of which, as seen in the upright position of the supporting plate (2), it lies on or hangs against a resting point (19) that is provided onto a middle portion of the locking part (7), and whereby the middle part below the resting point (19) is provided with a second gripping part (21), co-operating with the first gripping part (18), in such a way, that when the foot (11) is turned from off the seat (5), the second gripping means (21) ends up in a grip with the first gripping means (18) and holds this secure.

3. Loading platform according to claim 2, **characterized in that** the second gripping means (21) is formed by, as seen in the upright position of the supporting plate, a downwards running protruding part, and the first gripping means (18) is formed by a hook.

## Patentansprüche

1. Laderampe (1) mit einer Auflageplatte (2), die an ihrer Laderampenseite drehbar mit der Laderampe verbunden ist und die von dort aus aus einer Ruhestellung oder aufrechten Stellung, in der die Auflageplatte (2) im Wesentlichen aufrecht steht, in eine liegende Stellung nach unten gedreht werden kann, in der die Auflageplatte (2) im Wesentlichen waagerecht oder flach liegt und eine Überbrückung bilden kann zwischen der Laderampe und der Ladeboden eines Fahrzeugs, das be- und entladen werden soll, mit Verriegelungsmittel (7) zur Verriegelung der Auflageplatte (2) in aufrechter Stellung, **dadurch gekennzeichnet, dass** die Verriegelungsmittel dadurch ausgebildet sind, dass die Laderampe (1) mit einem Aufbau (4) mit einem Sitz (5) versehen ist, während die Auflageplatte (2) mit einem Verriegelungsteil (7) versehen ist, das, wie in der aufrechten Stellung der Auflageplatte (2) zu sehen ist, an einem Abschnitt (8) oben durch einen ersten Scharnierpunkt (9) an der Auflageplatte (2) aufgehängt ist und von außen aus eine senkrecht zur Ebene der Auflageplatte (2) verlaufende Drehbewegung ausführen kann, während ein Abschnitt (10) unter einen Fuß (11) aufweist, mittels dessen das Verriegelungsteil (7) auf dem Sitz (5) aufliegen kann, und mittels derer eine Drehung der Auflageplatte (2) nach unten aufgehalten wird, wobei ein Betätigungsmittel vorgesehen ist, durch das der Fuß (11) vom Sitz (5) abgedreht werden kann und ein Herunterdrehen der Auflageplatte (2) nicht mehr verhindert wird, wobei weitere Mittel vorgesehen sind, durch die, nach dem der Fuß (11) vom Sitz (5) gedreht wird, es verhindert werden kann, dass sich der Fuß (11) wieder auf den Sitz (5) zurückdreht.

2. Laderampe nach Anspruch 1, **dadurch gekennzeichnet, dass** die Mittel dadurch ausgebildet sind, dass die Auflageplatte (2) mit einem Halteteil (15) versehen ist, das, wie in der aufrechten Stellung der Auflageplatte (2) zu sehen ist, an einem oberen Ende (16) über einen zweiten Scharnierpunkt (17), der oberhalb des ersten Scharnierpunktes (9) angeordnet ist, an der Auflageplatte (2) aufgehängt ist und von dort aus eine senkrecht zur Ebene der Auflageplatte (2) verlaufende Drehbewegung ausführen kann, und wobei das Halteteil (15) an einem darunter liegenden Abschnitt ein erster Greifteil (18) umfasst, mittels dessen, wie in der aufrechten Stellung der Auflageplatte (2) zu sehen ist, es liegt auf oder hängt gegen einem Ruhepunkt (19), der auf einem Mittelteil des Verriegelungsteils (7) vorgesehen ist, und wobei der Mittelteil unterhalb des Ruhepunktes (19) mit einem zweiten Greifteil (21) versehen ist, das mit dem ersten Greifteil (18) zusammenwirkt, und zwar in der Weise, dass, wenn der Fuß (11) aus dem Sitz (5) gedreht wird, das zweite Greifmittel (21) endet in einem Griff mit dem ersten Greifmittel (18) und fest hält.

3. Ladeplattform nach Anspruch 2, **dadurch gekennzeichnet, dass** das zweite Greifmittel (21), wie in der aufrechten Stellung der Auflageplatte zu sehen ist, durch ein nach unten verlaufende herabhängendes Teil gebildet ist und das erste Greifmittel (18) durch einen Haken gebildet ist.

## Revendications

1. - Plateforme de chargement (1) avec une plaque de support (2) qui, à son côté plateforme de chargement, est reliée de manière rotative à la plateforme de chargement et qui, à partir de là, peut être tournée vers le bas pour passer d'une position de repos ou d'une position verticale, dans laquelle la plaque de support (2) se tient sensiblement à la verticale, à une position allongée, dans laquelle la plaque de support (2) se trouve sensiblement à l'horizontale ou à plat et peut former un pont entre la plateforme de chargement et le plancher de chargement d'un véhicule qui doit être chargé et déchargé, avec des moyens de verrouillage (7) pour le verrouillage de la plaque de support (2) dans la position verticale, **caractérisée par le fait que** les moyens de verrouillage sont formés en ce que la plateforme de chargement (1) comporte un corps (4) avec un siège (5), tandis que la plaque de support (2) comporte une partie de verrouillage (7) qui, tel que vu dans la position verticale de la plaque de support (2), à une partie (8) au-dessus, à travers un premier point d'articulation (9), est suspendue à la plaque de support (2) et, à partir de là, peut effectuer un mouvement de rotation perpendiculairement au plan de la plaque de support (2), tandis qu'une partie au-dessous (10) comprend un pied (11) au moyen duquel la pièce de verrouillage (7) peut reposer sur le siège (5), et au moyen duquel une rotation vers le bas de la plaque de support (2) est retenue, ce par quoi un moyen de fonctionnement est fourni par lequel le pied (11) peut être tourné hors du siège (5) et une rotation vers le bas de la plaque de support (2) n'est plus empêchée, ce par quoi d'autres moyens sont fournis par lesquels, après que le pied (11) a été tourné hors du siège (5), il peut être empêché que le pied (11) retourne à nouveau sur le siège (5).

2. - Plateforme de chargement selon la revendication 1, **caractérisée par le fait que** les moyens sont formés en ce que la plaque de support (2) comporte une pièce de maintien (15) qui, tel que vu dans la position verticale de la plaque de support (2) à une extrémité supérieure (16) par l'intermédiaire d'un second point d'articulation (17), situé au-dessus du premier point d'articulation (9), est suspendue à la plaque de support (2) et, à partir de là, peut effectuer un mouvement de rotation perpendiculairement au plan de la plaque de support (2), et ce par quoi la pièce de maintien (15) à une partie au-dessous, comprend une première pièce de préhension (18) au moyen de laquelle, tel que vu dans la position verticale de la plaque de support (2), elle se trouve sur ou est suspendue à un point d'appui (19) qui est situé sur une partie médiane de la pièce de verrouillage (7), et ce par quoi la partie médiane au-dessous du point d'appui (19) comporte une seconde pièce de préhension (21), coopérant avec la première pièce de préhension (18), d'une manière telle que, lorsque le pied (11) est tourné hors du siège (5), le second moyen de préhension (21) se retrouve en prise avec le premier moyen de préhension (18) et le maintient en sécurité.

3. - Plateforme de chargement selon la revendication 2, **caractérisée par le fait que** le second moyen de préhension (21) est formé par, tel que vu dans la position verticale de la plaque de support, une partie saillante orientée vers le bas, et que le premier moyen de préhension (18) est formé par un crochet.
